# EUROPÄISCHE PATENTSCHRIFT

(11) **EP 2 399 158 B1**
(45) Veröffentlichungstag und Bekanntmachung des Hinweises auf die Patenterteilung: **20.04.2016**
(21) Anmeldenummer: 10705550.1
(22) Anmeldetag: 17.02.2010
(51) Int. Cl.: G02B 27/09

(54) **VORRICHTUNG ZUR HOMOGENISIERUNG VON LASERSTRAHLUNG**
DEVICE FOR HOMOGENISATION OF LASER RADIATION
DISPOSIF POUR HOMOGENEISATION DE RADIATION LASER

(30) Priorität: 18.02.2009 DE 102009009366
(43) Veröffentlichungstag der Anmeldung: 28.12.2011
(73) Patentinhaber: LIMO Patentverwaltung GmbH & Co. KG, 44319 Dortmund (DE)
(72) Erfinder: MIKHAILOV, Aleksei, 44319 Dortmund (DE); KOLOTUSHKIN, Yury, 199155 St. Petersburg (RU)
(74) Vertreter: Basfeld, Rainer
(86) Internationale Anmeldenummer: PCT/EP2010/000993
(87) Internationale Veröffentlichungsnummer: WO 2010/094468

(56) Entgegenhaltungen:
- EP-A2- 1 793 278
- WO-A1-2005/019900
- DE-A1-102006 047 941
- US-A1- 2007 054 479

## Beschreibung

Die vorliegende Erfindung betrifft Vorrichtung zur Homogenisierung von Laserstrahlung gemäß dem Oberbegriff des Anspruchs 1.

Definitionen: In Ausbreitungsrichtung des zu beeinflussenden Lichts meint die mittlere Ausbreitungsrichtung des Lichts, insbesondere wenn dieses keine ebene Welle ist oder zumindest teilweise konvergent oder divergent ist. Mit Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl mit einem Gauß-Profil, der keinen infinitesimal kleinen, sondern einen ausgedehnten Strahlquerschnitt aufweist.

Eine Vorrichtung zur Homogenisierung von Laserstrahlung ist aus der europäischen Patentanmeldung EP 1 489 438 A1 bekannt. Die darin beschriebene Vorrichtung umfasst zwei Homogenisiererstufen, die in Ausbreitungsrichtung der Strahlung hintereinander angeordnet sind. Jede dieser Stufen weist dabei ein Substrat mit einem Zylinderlinsenarray auf der Eintrittsfläche und einem dazu gekreuzten Zylinderlinsenarray auf der Austrittsfläche auf. Durch die zweistufige Ausführung kann die Laserstrahlung sowohl hinsichtlich ihrer räumlichen Verteilung, als auch hinsichtlich ihrer Winkelverteilung homogenisiert werden. Durch die Verwendung gekreuzter Zylinderlinsen kann dies hinsichtlich zweier unabhängiger Richtungen, beispielsweise bei einem Laserdiodenbarren als Laserstrahlquelle hinsichtlich der so genannten Fast-Axis und der so genannten Slow-Axis erfolgen. Der Abstand der Stufen zueinander entspricht im wesentlichen der Brennweite der zweiten Linsenarrays.

Als nachteilig bei einer derartigen Vorrichtung erweist sich die Tatsache, dass die Überlagerung der einzelnen Teilstrahlen in der Arbeitsebene zu Interferenzeffekten führen kann, die eine unerwünschte Strukturierung der Intensitätsverteilung in der Arbeitsebene verursachen können.

Eine Vorrichtung der eingangs genannten Art ist aus der WO 2005/019900 A1 bekannt. Die darin beschriebene Vorrichtung umfasst einen Stufenspiegel mit einer Vielzahl von Spiegelflächen, die versetzt zueinander angeordnet sind. Dabei kann der Stufenspiegel aus einem Bündel von Stäben bestehen, die miteinander verklebt sind, wobei deren Endflächen als Spiegelflächen dienen. Eine Laserstrahlung wird von diesem Stufenspiegel in eine Mehrzahl von Teilstrahlen aufgespalten, die einen Gangunterschied zueinander aufweisen. Wenn dieser Gangunterschied größer ist als die Kohärenzlänge des die Laserstrahlung erzeugenden Lasers, können dadurch störende Interferenzeffekte vermieden werden. Die in der WO 2005/019900 A1 beschriebene Vorrichtung umfasst weiterhin ein Linsenarray, wobei durch jede der Linsen des Arrays ein von einem der Spiegelelemente reflektierter Teilstrahl der Laserstrahlung hindurchtritt. Hinter dem Linsenarray ist eine Kondensoroptik vorgesehen, die die Teilstrahlen in der hinteren Brennebene der Kondensoroptik überlagern kann. Zwischen dem Stufenspiegel und dem Linsenarray kann eine 4f-Abbildungsoptik angeordnet sein. Diese kann jedoch auch weggelassen werden.

Eine weitere Vorrichtung zur Homogenisierung von Laserstrahlung ist aus der deutschen Patentanmeldung DE 101 48 167 A1 bekannt. Bei der darin beschriebenen Vorrichtung wird das zu homogenisierende Licht vor dem Auftreffen auf ein Linsenarray von einem Stufenspiegel reflektiert, der unter einem derartigen Winkel in der Vorrichtung angeordnet ist, dass die von dem Stufenspiegel ausgehenden Teilstrahlen einen Gangunterschied aufweisen. Wenn dieser Gangunterschied größer ist als die Kohärenzlänge des Lasers, können dadurch die störenden Interferenzeffekte vermieden werden.

Als nachteilig bei dieser Vorrichtung erweist sich, dass lediglich ein Linsenarray zur Homogenisierung vorgesehen ist, so dass das Laserlicht nur hinsichtlich seiner räumlichen Verteilung, nicht jedoch hinsichtlich seiner Winkelverteilung homogenisiert werden kann. Dass führt dazu, dass eine divergente Laserstrahlung mit dieser Vorrichtung nicht homogenisiert werden kann. Falls in die Vorrichtung gemäß DE 101 48 167 A1 ein zweites Linsenarray eingesetzt würde, ergäbe sich zwar eine Vorrichtung, mit der auch divergente Laserstrahlung homogenisiert werden könnte. Eine derartige Vorrichtung wäre jedoch vergleichsweise aufwendig konstruiert und würde aufgrund der vielen refraktiven und reflektiven Flächen größere Verluste aufweisen.

Das der vorliegenden Erfindung zugrunde liegende Problem ist die Schaffung einer Vorrichtung der eingangs genannten Art, die bei einfacher Ausbildung der Vorrichtung eine homogenere Intensitätsverteilung bewirken kann.

Dies wird erfindungsgemäß durch eine Vorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass der Abstand zwischen einem jeden der Spiegelelemente und den diesen zugeordneten Linsenelementen gleich der Brennweite des jeweiligen Linsenelements ist. Auf diese Weise können die Spiegelelemente die Funktion des ersten Linsenarrays der aus dem Stand der Technik bekannten zweistufigen Homogenisierer gemäß EP 1 489 438 A1 übernehmen. Die erfindungsgemäße Vorrichtung kann daher auch divergente Laserstrahlung homogenisieren. Trotz Verbesserung der Homogenisierung durch die von den Spiegelelementen verursachten Gangunterschiede benötigt die erfindungsgemäße Vorrichtung vergleichsweise wenig Bauteile.

Insbesondere dient ein jedes der Spiegelelemente als Eintrittspupille für das diesem Spiegelelement zugeordnete Linsenelement, wobei die Eintrittspupille scharfe Flanken aufweist.

Die Spiegelelemente sind beispielsweise Teil eines Stufenspiegels, wohingegen die Linsenelemente beispielsweise Teil eines einstückigen Linsenarrays sind. Zusätzlich umfasst die Vorrichtung eine als Fourierlinse dienende Linse, die die durch die Linsenelemente hindurch getretenen Teilstrahlen miteinander überlagern kann.

Die Spiegelelemente befinden sich in der vorderen Brennebene der Linsenelemente. Die Aufgabe der Spiegelelemente ist es, eine Eintrittspupille mit scharfen Flanken für die Linsenelemente bereitzustellen. Da jeder Punkt in der vorderen Brennebene der Linsenelemente für einen bestimmten Winkel des aus den Linsenelementen austretenden Laserlichts verantwortlich ist, führt die Feldverteilung mit scharfen Flanken in der vorderen Brennebene zu einer Winkelverteilung mit ebenso scharfen Flanken hinter den Linsenelementen. Die nachfolgende Fourierlinse erzeugt in ihrer hinteren Brennebene, die auch als Arbeitsebene der ganzen Vorrichtung dienen kann, eine homogene Intensitätsverteilung, die scharfe Flanken aufweist. Auf diese Weise kann mit der erfindungsgemäßen Vorrichtung eine homogene Verteilung in einer Arbeitsebene erzeugt werden, auch wenn die Laserstrahlung vor dem Eintritt in die Vorrichtung divergent ist. Dadurch unterscheidet sich die erfindungsgemäße zweistufige Anordnung aus Stufenspiegel und Linsenarray von einer einstufigen, die ein Linsenarray und eine Fourierlinse beziehungsweise einen in einem nicht der Brennweite des Linsenarrays entsprechenden Abstand vor diesem angeordneten Stufenspiegel, ein Linsenarray und eine Fourierlinse umfasst. Mit Hilfe einer einstufigen Anordnung ist es prinzipiell unmöglich, eine homogene Verteilung mit scharfen Flanken zu erhalten, wenn die zu homogenisierende Laserstrahlung divergent ist.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Seitenansicht einer ersten Ausführungsform einer erfindungsgemäßen Vorrichtung;
- Fig. 2: eine schematische Seitenansicht einer zweiten Ausführungsform einer erfindungsgemäßen Vorrichtung;
- Fig. 3: eine schematische Seitenansicht einer dritten Ausführungsform einer erfindungsgemäßen Vorrichtung.

In den Figuren sind gleiche oder funktional gleiche Teile oder Objekte mit gleichen Bezugszeichen versehen.

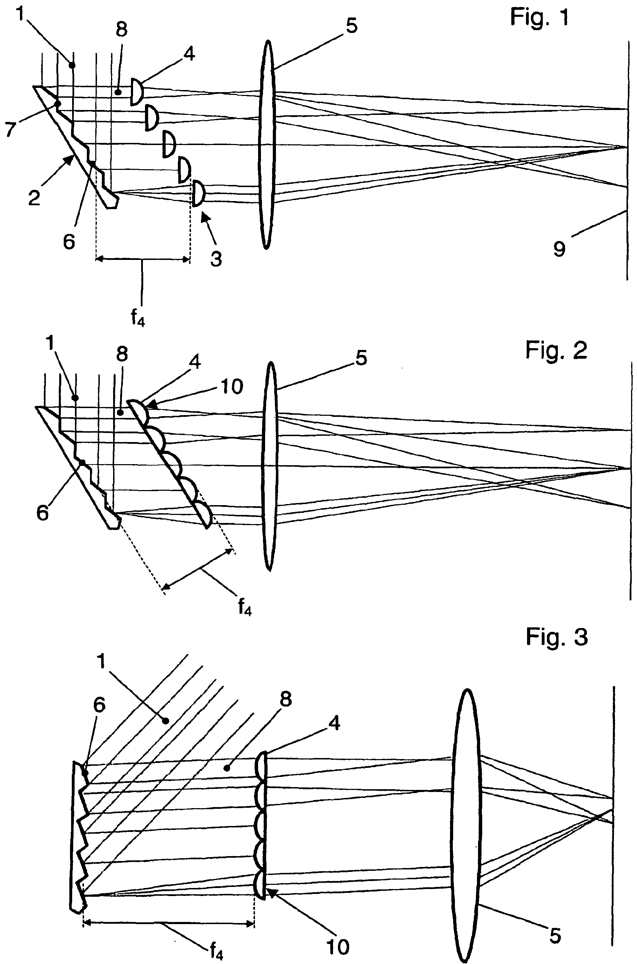

Die Ausführungsform gemäß Fig. 1 umfasst in Ausbreitungsrichtung der zu homogenisierenden Laserstrahlung 1 hintereinander einen Stufenspiegel 2, ein Array 3 von Linsenelementen 4 und eine in einer Fourieranordnung positionierte Linse 5.

Der Stufenspiegel 2 weist eine Mehrzahl von reflektierenden, planen Spiegelelementen 6 auf, die durch Stufen 7 voneinander getrennt sind. Durch die Spiegelelemente 6 wird die Laserstrahlung 1 in eine der Zahl der Spiegelelemente 6 entsprechende Zahl von Teilstrahlen 8 aufgeteilt. Dabei wirken die seitlich durch die Stufen 7 begrenzten Spiegelelemente 6 als Eintrittspupille mit scharfen Flanken für die Laserstrahlung 1.

Dies insbesondere deshalb, weil die Stufen 7 einen anderen Winkel, im abgebildeten Ausführungsbeispiel einen Winkel von 0° beziehungsweise 180° mit der einfallenden Laserstrahlung 1 einschließen. Die Stufen können daher die Laserstrahlung nicht in Richtung auf das Array 3 ablenken.

Die Spiegelelemente 6 sind jeweils unter einem Winkel von 45° zu der einfallenden Laserstrahlung 1 ausgerichtet. Aufgrund der Stufen 7 sind sie derart versetzt gegeneinander, dass die Teilstrahlen 8 zueinander einen optischen Gangunterschied aufweisen. Wenn die Kohärenzlänge der Laserstrahlung 1 kleiner als der Gangunterschied benachbarter Teilstrahlen 8 ist, können die Interferenzeffekte nach Überlagerung durch die Linse 5 vermieden werden.

Es besteht die Möglichkeit, anstelle der planen Oberflächen der Spiegelelemente 6 konkave Oberflächen vorzusehen. Weiterhin besteht die Möglichkeit, die Spiegelelemente durch ein Prismenarray zu realisieren, bei dem in den einzelnen Prismen totale innere Reflexionen auftreten.

In dem abgebildeten Ausführungsbeispiel sind die Linsenelemente 4 Zylinderlinsen, deren Zylinderachsen sich in die Zeichnungsebene hineinerstrecken. Die optischen Achsen der Linsenelemente 4 sind parallel zu der Ausbreitungsrichtung der Teilstrahlen 8 ausgerichtet.

Ein jeder der Teilstrahlen 8 trifft auf eines der Linsenelemente 4, so dass einem jeden der Spiegelelemente 6 eines der Linsenelemente 4 zugeordnet ist. Die Linsenelemente 4 des Arrays 3 weisen sämtlich die gleiche Brennweite f₄ auf. Der Abstand zwischen dem Mittelpunkt eines Spiegelelements 6 und dem ihm zugeordneten Linsenelement 4 ist gleich der Brennweite f₄, so dass sich jedes der Spiegelelemente 6 genau in der vorderen Brennebene des entsprechenden Linsenelements 4 befindet.

Aufgrund der gleichen Brennweiten f₄ der Linsenelemente 4 beziehungsweise der gleichen Abstände zwischen den Mittelpunkten der Spiegelelemente 6 und den ihn zugeordneten Linsenelementen 4 ist die Richtung, in der die Spiegelelemente 6 nebeneinander angeordnet sind, parallel zu der Richtung, in der die Linsenelemente 4 nebeneinander angeordnet sind.

Es besteht die Möglichkeit, dass die Linsenelemente 4 voneinander verschiedene Brennweiten aufweisen. Dabei muss sichergestellt werden, dass der Abstand zwischen jedem Linsenelement und dem ihm zugeordneten Spiegelelement trotzdem gleich der Brennweite des entsprechenden Linsenelements ist. In diesem Fall unterscheiden sich also die Abstände zwischen den einzelnen Linsenelementen und den ihn zugeordneten Spiegelelementen voneinander.

Die in einer Fourieranordnung positionierte Linse 5 überlagert die von den Linsenelementen 4 ausgehenden Teilstrahlen 8 in einer Arbeitsebene 9.

Die Ausführungsform gemäß Fig. 2 unterscheidet sich von derjenigen gemäß Fig. 1 dadurch, dass die Linsenelemente 4 zu einem einstückigen Linsenarray 10 zusammengefasst sind. Das Linsenarray 10 ist so angeordnet, dass die optische Achse der Linsenelemente 4 einen Winkel ungleich 0 oder 180° mit der Ausbreitungsrichtung der Teilstrahlen 8 einschließt. Auch bei dieser Anordnung befindet sich jedes der Spiegelelemente 6 genau in der vorderen Brennebene des ihm zugeordneten Linsenelements 4.

Der Mangel einer solchen Anordnung besteht darin, dass die Linsenelemente 4 des Linsenarrays 10 mit den Teilstrahlen 8 korrekt umgehen müssen, obwohl diese mit der optischen Achse der Linsenelemente 4 relativ große Winkel einschließen. In der Vorrichtung gemäß Fig. 2 ist der Stufenspiegel 2 so angeordnet, dass die einfallende Laserstrahlung 1 und die reflektierten Teilstrahlen 8 einen Winkel von 90° miteinander einschließen. Eine derartige Anordnung ist nicht unabdingbar.

Bei der Ausführungsform gemäß Fig. 3 ist der Winkel, den die einfallende Laserstrahlung 1 und die reflektierten Teilstrahlen 8 miteinander einschließen, kleiner. Dadurch fallen die Teilstrahlen 8 senkrecht auf das Linsenarray 10, so dass die optischen Achsen der Linseelemente 4 parallel zu der Ausbreitungsrichtung der Teilstrahlen 8 ausgerichtet sein können.

## Patentansprüche

1. Vorrichtung zur Homogenisierung von Laserstrahlung (1), umfassend
- eine Mehrzahl von versetzt zueinander angeordneten Spiegelelementen (6), an denen die zu homogenisierende Laserstrahlung (1) derart reflektiert werden kann, dass sie in eine der Zahl der Spiegelelemente (6) entsprechende Mehrzahl von Teilstrahlen (8) aufgeteilt wird, die durch die Reflexion einen Gangunterschied zueinander aufweisen;
- eine Mehrzahl von Linsenelementen (4), von denen jeweils eines derart einem der Spiegelelemente (6) zugeordnet ist, dass jeweils einer der Teilstrahlen (8) durch eines der Linsenelemente (4) hindurch treten kann;
- eine als Fourierlinse dienende Linse (5), die die durch die Linsenelemente (4) hindurch getretenen Teilstrahlen (8) überlagern kann;
**dadurch gekennzeichnet, dass** der Abstand zwischen einem jeden der Spiegelelemente (6) und den diesen zugeordneten Linsenelementen (4) gleich der Brennweite (f₄) des jeweiligen Linsenelements (4) ist.

2. Vorrichtung nach Anspruch 1, **dadurch gekennzeichnet, dass** ein jedes der Spiegelelemente (6) als Eintrittspupille für das diesem Spiegelelement (6) zugeordnete Linsenelement (4) dient.

3. Vorrichtung nach Anspruch 2, **dadurch gekennzeichnet, dass** die Eintrittspupille scharfe Flanken aufweist.

4. Vorrichtung nach einem der Ansprüche 1 bis 3, **dadurch gekennzeichnet, dass** die Spiegelelemente (6) in einer ersten Richtung nebeneinander angeordnet sind.

5. Vorrichtung nach einem der Ansprüche 1 bis 4, **dadurch gekennzeichnet, dass** die Spiegelelemente (6) Teil eines Stufenspiegels (2) sind.

6. Vorrichtung nach einem der Ansprüche 1 bis 4, **dadurch gekennzeichnet, dass** die Spiegelelemente als separate Spiegel ausgebildet sind.

7. Vorrichtung nach einem der Ansprüche 1 bis 6, **dadurch gekennzeichnet, dass** sämtliche Spiegelelemente (6) die gleiche Apertur aufweisen.

8. Vorrichtung nach einem der Ansprüche 1 bis 7, **dadurch gekennzeichnet, dass** eines, mehrere oder sämtliche Spiegelelemente (6) plan sind.

9. Vorrichtung nach einem der Ansprüche 1 bis 8, **dadurch gekennzeichnet, dass** die Linsenelemente (4) in einer zweiten Richtung nebeneinander angeordnet sind.

10. Vorrichtung nach Anspruch 9, **dadurch gekennzeichnet, dass** die erste Richtung, in der die Spiegelelemente (6) nebeneinander angeordnet sind, parallel zu der zweiten Richtung ist, in der die Linsenelemente (4) nebeneinander angeordnet sind.

11. Vorrichtung nach einem der Ansprüche 1 bis 10, **dadurch gekennzeichnet, dass** die Linsenelemente (4) Teil eines einstückigen Linsenarrays (10) sind.

12. Vorrichtung nach einem der Ansprüche 1 bis 10, **dadurch gekennzeichnet, dass** die Linsenelemente (4) als Array (3) separater Linsenelemente (4) ausgebildet sind.

13. Vorrichtung nach einem der Ansprüche 1 bis 12, **dadurch gekennzeichnet, dass** sämtliche Linsenelemente (4) die gleiche Brennweite (f₄) aufweisen.

14. Vorrichtung nach einem der Ansprüche 1 bis 13, **dadurch gekennzeichnet, dass** sämtliche Linsenelemente (4) die gleiche Apertur aufweisen.

## Claims

1. Device for homogenizing laser radiation (1), comprising
- a multiplicity of mirror elements (6) which are arranged offset with respect to one another and on which the laser radiation (1) to be homogenized can be reflected so that it is divided into a multiplicity of sub-beams (8), corresponding to the number of mirror elements (6), which have a path difference with respect to one another as a result of the reflection;
- a multiplicity of lens elements (4), one of which is in each case assigned to one of the mirror elements (6) so that one of the sub-beams (8) can respectively pass through one of the lens elements (4) ;
- a lens (5) which acts as a Fourier lens that can superpose the sub-beams (8) passing through the lens elements (4);
**characterized in that** the distance between each of the mirror elements (6) and the lens elements (4) assigned thereto is equal to the focal length (f₄) of the lens element (4) in question.

2. Device according to Claim 1, **characterized in that** each of the mirror elements (6) acts as an entry pupil for the lens element (4) assigned to this mirror element (6).

3. Device according to Claim 2, **characterized in that** the entry pupil has sharp edges.

4. Device according to one of Claims 1 to 3, **characterized in that** the mirror elements (6) are arranged next to one another in a first direction.

5. Device according to one of Claims 1 to 4, **characterized in that** the mirror elements (6) are part of a stepped mirror (2).

6. Device according to one of Claims 1 to 4, **characterized in that** the mirror elements are formed as separate mirrors.

7. Device according to one of Claims 1 to 6, **characterized in that** all the mirror elements (6) have the same aperture.

8. Device according to one of Claims 1 to 7, **characterized in that** one, several or all of the mirror elements (6) are planar.

9. Device according to one of Claims 1 to 8, **characterized in that** the lens elements (4) are arranged next to one another in a second direction.

10. Device according to Claim 9, **characterized in that** the first direction, in which the mirror elements (6) are arranged next to one another, is parallel to the second direction in which the lens elements (4) are arranged next to one another.

11. Device according to one of Claims 1 to 10, **characterized in that** the lens elements (4) are part of a monobloc lens array (10).

12. Device according to one of Claims 1 to 10, **characterized in that** the lens elements (4) are formed as an array (3) of separate lens elements (4).

13. Device according to one of Claims 1 to 12, **characterized in that** all the lens elements (4) have the same focal length (f₄).

14. Device according to one of Claims 1 to 13, **characterized in that** all the lens elements (4) have the same aperture.

## Revendications

1. Dispositif d'homogénéisation d'un rayonnement laser (1), comprenant
- une pluralité d'éléments miroirs (6) disposés de manière décalée les uns par rapport aux autres, sur lesquels le rayonnement laser (1) à homogénéiser peut être réfléchi de telle sorte qu'il est divisé en une pluralité de rayons partiels (8) correspondant au nombre d'éléments miroirs (6) qui, du fait de la réflexion, présentent entre eux une différence de chemin ;
- une pluralité d'éléments lentilles (4) dont chacun est respectivement associé à l'un des éléments miroirs (6) de telle sorte que l'un des rayons partiels (8) peut respectivement passer à travers l'un des éléments lentilles (4) ;
- une lentille (5) servant de lentille de Fourier qui peut superposer les rayons partiels (8) qui sont passés à travers les éléments lentilles (4) ;
**caractérisé en ce que** l'écart entre chacun des éléments miroirs (6) et les éléments lentilles (4) qui leurs sont associés est égal à la distance focale (f₄) de l'élément lentille (4) correspondant.

2. Dispositif selon la revendication 1, **caractérisé en ce que** chacun des éléments miroirs (6) sert de pupille d'entrée pour l'élément lentille (4) associé à cet élément miroir (6).

3. Dispositif selon la revendication 2, **caractérisé en ce que** la pupille d'entrée possède des flancs nets.

4. Dispositif selon l'une des revendications 1 à 3, **caractérisé en ce que** les éléments miroirs (6) sont disposés les uns à côté des autres dans une première direction.

5. Dispositif selon l'une des revendications 1 à 4, **caractérisé en ce que** les éléments miroirs (6) font partie d'un miroir étagé (2).

6. Dispositif selon l'une des revendications 1 à 4, **caractérisé en ce que** les éléments miroirs sont réalisés sous la forme de miroirs distincts.

7. Dispositif selon l'une des revendications 1 à 6, **caractérisé en ce que** tous les éléments miroirs (6) possèdent la même ouverture.

8. Dispositif selon l'une des revendications 1 à 7, **caractérisé en ce qu'**un, plusieurs ou tous les éléments miroirs (6) sont plans.

9. Dispositif selon l'une des revendications 1 à 8, **caractérisé en ce que** les éléments lentilles (4) sont disposés les uns à côté des autres dans une deuxième direction.

10. Dispositif selon la revendication 9, **caractérisé en ce que** la première direction, dans laquelle les éléments miroirs (6) sont disposés les uns à côté des autres, est parallèle à la deuxième direction, dans laquelle les éléments lentilles (4) sont disposés les uns à côté des autres.

11. Dispositif selon l'une des revendications 1 à 10, **caractérisé en ce que** les éléments lentilles (4) font partie d'un réseau de lentilles (10) monobloc.

12. Dispositif selon l'une des revendications 1 à 10, **caractérisé en ce que** les éléments lentilles (4) sont réalisés sous la forme d'un réseau (3) d'éléments lentilles (4) distincts.

13. Dispositif selon l'une des revendications 1 à 12, **caractérisé en ce que** tous les éléments lentilles (4) présentent la même distance focale (f₄).

14. Dispositif selon l'une des revendications 1 à 13, **caractérisé en ce que** tous les éléments lentilles (4) présentent la même ouverture.
